# EUROPÄISCHE PATENTSCHRIFT

(11) **EP 0 788 778 B1**
(45) Veröffentlichungstag und Bekanntmachung des Hinweises auf die Patenterteilung: **17.10.2001**
(21) Anmeldenummer: 96118914.9
(22) Anmeldetag: 26.11.1996
(51) Int. Cl.: A61C 1/00, A61C 1/06, H02P 7/80

(54) **Steuerschaltung für dentale Antriebe**
Control circuit for driving dental instruments
Circuit de commande pour l'entraînement d'outils dentaires

(30) Priorität: 08.02.1996 DE 19604627
(43) Veröffentlichungstag der Anmeldung: 13.08.1997
(73) Patentinhaber: KALTENBACH & VOIGT GMBH & CO., 88400 Biberach (DE)
(72) Erfinder: Gantner, Manfred, 88299 Leutkirch (DE)
(74) Vertreter: Schmidt-Evers, Jürgen, Dipl.-Ing.

(56) Entgegenhaltungen:
- EP-A- 0 409 226
- FR-A- 2 233 030
- FR-A- 2 397 180

## Beschreibung

Die vorliegende Erfindung betrifft eine Steuerschaltung für dentale Antriebe nach dem Oberbegriff des Patentanspruchs 1.

Dentale Antriebe, wie z.B. zahnärztliche Kleinmotoren, werden zum Antrieb von an den Kleinmotor ankoppelbaren zahnärztlichen Instrumenten eingesetzt. Dabei werden bisher in der zahnärztlichen Praxis verschiedene elektrische Kleinmotoren, d.h. Motortypen, verwendet. Der Gleichstrom-Kollektormotor besitzt eine Drehzahlspanne von 0 bis ca. 40.000 min⁻¹. Bei niedrigen Drehzahlen, wie sie z.B. für endodontische Behandlungen benötigt werden, erzeugt dieser Motortyp ein hohes Drehmoment. Dagegen ist bei hohen Drehzahlen der Verschleiß des Kohlen-/Kollektorsystems des Gleichstrom-Elektromotors groß und der Motor erwärmt sich aufgrund des schlechten Wirkungsgrades sehr stark. Der Drehstrom-Asynchronmotor weist kein Kohlen/Kollektorsystem auf und besitzt insgesamt nur wenig Verschleißteile. Sein Wirkungsgrad liegt jedoch nur im mittleren Bereich und die mit dem Drehstrom-Asynchronmotor erzeugbaren Drehzahlen sind nach unten auf ca. 5.000 min⁻¹ begrenzt. Schließlich ist auch der kollektorlose Gleichstrommotor bekannt, der neben den Lagern keine Verschleißteile aufweist und dadurch sehr langlebig ist. Der kollektorlose Gleichstrommotor besitzt eine große Drehzahlspanne und weist einen sehr guten Wirkungsgrad mit einer geringen Eigenerwärmung auf. Der Drehzahlbereich des kollektorlosen Gleichstrommotors ist jedoch nach unten begrenzt. Dieser Nachteil kann durch den Anbau von Positionssensoren, die jedoch den Aufbau des Gleichstrommotors aufwendiger gestalten, ausgeglichen werden.

Zu Steuerung derartiger Kleinmotortypen sind verschiedene Steuerschaltungen bekannt. Aus der DE-C1-44 12 413 ist eine Steuerschaltung für eine optimierte Drehzahlregelung eines Elektrokleinmotors für zahnärztliche Zwecke mittels EMK-Messung bekannt. Aus der gemessenen EMK (elektromotorische Kraft) wird auf die Ist-Drehzahl geschlossen und anschließend die Drehzahl entsprechend geregelt. Diese Vorgehensweise ist insbesondere vorteilhaft, um auch im unteren Drehzahlbereich ein gutes Motordrehmoment zu erzielen.

Bisher ist es jedoch nicht möglich, verschiedene Kleinmotortypen mit einer einzigen Steuerschaltung zu betreiben. Dies bedeutet für den Zahnarzt, daß er abhängig von dem Anwendungsbereich unterschiedliche Steuerschaltungen mit jeweils einer separaten Versorgungselektronik für die unterschiedlichen Kleinmotortypen bereitstellen muß, was nicht nur kostenintensiv, sondern auch bedienungsunfreundlich ist.

Der Erfindung liegt daher die Aufgabe zugrunde, eine Steuerschaltung für dentale Antriebe nach dem Oberbegriff der Patentansprüche 1 und 3 derart auszugestalten, daß das zuvor beschriebene Problem beseitigt wird.

Diese Aufgabe wird durch die kennzeichnenden Merkmale der Patentansprüche 1 und 3 gelöst. Die erfindungsgemäße Steuerschaltung für dentale Antriebe, z.B. zahnärztliche Kleinmotoren, ist derart ausgebildet, daß sie zur Ansteuerung unterschiedlicher Typen von Kleinmotoren geeignet ist. Der Typ des an die Steuerschaltung angeschlossenen zahnärztlichen Kleinmotors wird automatisch durch die Steuerschaltung erkannt, so daß die Steuerschaltung abhängig von dem bekannten Typ des angeschlossenen Kleinmotors über eine in der Steuerschaltung angeordnete Steuer- und Regeleinrichtung ausgewählte Betriebsparameter des angeschlossenen Kleinmotors steuert bzw. regelt.

Aufgrund der erfindungsgemäßen Lösung sind keine separaten Steuerschaltungen bzw. Versorgungselektroniken für jeden möglichen Kleinmotortyp erforderlich. Dies ist sowohl platz- als auch kostensparend. Da die Steuerschaltung gleichzeitig zur Ansteuerung unterschiedlicher Typen von Kleinmotoren geeignet ist, entsteht für den Zahnarzt die Möglichkeit, mit einer einzigen Steuerschaltung beispielsweise bei kleinen Drehzahlen und hohen Drehmomenten (z.B. bei Anwendungen in der Chirurgie oder Endodontie) einen konventionellen Gleichstrom-Kollektormotor und für universelle Arbeiten (z.B. für die Anfertigung von Präparationen) im mittleren oder hohen Drehzahlbereich einen kollektorlosen Motor zu betreiben. Zudem kann die Steuerschaltung mit unterschiedlichen Kleinmotortypen bestückt werden, ohne daß an der Steuerschaltung eine Änderung vorgenommen werden muß. Für die Erkennung des installierten Motortyps sind keine zusätzlichen Sensoren notwendig. Aufgrund der automatischen Erkennung des an die Steuerschaltung angeschlossenen Motortyps ist erfindungsgemäß gewährleistet, daß der jeweils angeschlossene Kleinmotor richtig betrieben wird, d.h. die Steuerschaltung steuert bzw. regelt ausgewählte Betriebsparameter, wie z.B. die Drehzahl oder den Links-/Rechtslauf, des angeschlossenen Kleinmotors abhängig von dem erkannten Typ des angeschlossenen Kleinmotors.

Die Steuerschaltung weist vorzugsweise sowohl einen Anschluß für einen dreiphasigen kollektorlosen Gleichspannungsmotor als auch einen Anschluß für einen zweiphasigen Kollektor-Gleichstrommotor auf. Zur Erkennung des angeschlossenen Kleinmotortyps wird an zwei der drei Phasen des Anschlusses für den dreiphasigen kollektorlosen Kleinmotor eine Meßspannung angelegt, wobei die beiden Phasen des Anschlusses für den Kollektor-Gleichstrommotor mit zwei Phasen des Anschlusses für den dreiphasigen kollektorlosen Kleinmotor verbunden sind und eine der beiden Phasen des Anschlusses für den Kollektor-Gleichstrommotor nicht eine der mit der Meßspannung beaufschlagten Phasen ist. Durch Messen des über den angeschlossenen Motor fließenden und aufgrund der Meßspannung hervorgerufenen Meßstroms kann die in der Steuerschaltung enthaltene Steuer- und Regeleinrichtung auf einfache Weise auf den Typ des angeschlossenen Kleinmotors schließen und diesen entsprechend betreiben. Um die Motorspannung und den Motorstrom zu erfassen besitzt die Steuerschaltung eine entsprechende Meßeinrichtung.

Weitere vorteilhafte Ausgestaltungen der Erfindung sind in den Unteransprüchen angegeben.

Die Erfindung wird nachfolgend unter Bezugnahme auf ein vorteilhaftes Ausführungsbeispiel näher erläutert.

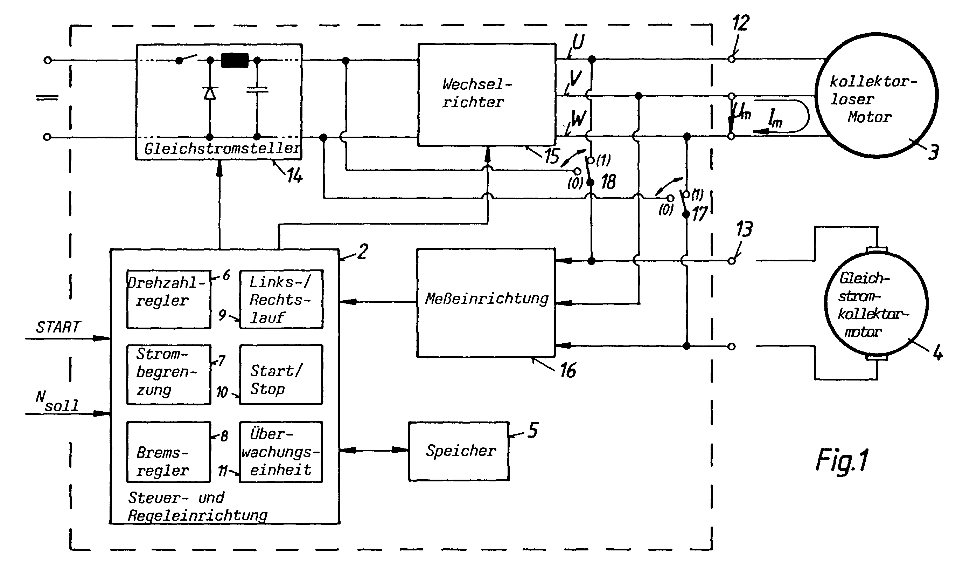

Figur 1 zeigt ein Blockschaltbild des bevorzugten Ausführungsbeispieles der Erfindung.

Die in Figur 1 gezeigte Steuerschaltung 1 besitzt eine Steuer- und Regeleinrichtung 2, einen Gleichstromsteller 14, einen Wechselrichter 15, eine Meßeinrichtung 16, einen Speicher 5 sowie Anschlüsse 12 bzw. 13 für einen kollektorlosen Motor 3 bzw. einen Gleichstrom-Kollektormotor 4. Der Gleichstromsteller 14 arbeitet als Tiefsetzsteller und wandelt eine feste Eingangs-Gleichspannung, z.B. von 33 Volt, in eine variable Spannung um, die durch den Wechselrichter 15 für den kollektorlosen Motor 3 in eine dreiphasige Wechselspannung umgesetzt wird, deren Phasen zueinander um 120° verschoben sind. Für den Betrieb des Gleichstrom-Kollektormotors 4 werden dessen Anschlüsse direkt mit der von dem Gleichstromsteller 14 gelieferten Spannung verbunden. Die Meßeinrichtung 16 dient zur EMK-Erfassung und mißt sowohl die Spannung als auch den Strom des angeschlossenen Motortyps. Die Steuer- und Regeleinrichtung 2 ist mit der Meßeinrichtung 16 verbunden und steuert bzw. regelt abhängig von dem erkannten Motortyp bzw. abhängig von der durch die Meßeinrichtung 16 erfaßten Motorspannung und den erfaßten Motorstrom ausgewählte Betriebsparameter, wie beispielsweise die Drehzahl oder den Links-/Rechtslauf, des angeschlossenen Motors. Zu diesem Zweck umfaßt die Steuer- und Regeleinrichtung einen Drehzahlregler 6, eine Strombegrenzung 7, einen Bremsregler 8, eine Links/Rechtslaufeinheit 9, eine Start-/Stopeinheit 10 sowie eine Überwachungseinheit 11, die verschiedene Überwachungsfünktionen durchführt. Die Überwachungseinheit 11 kann beispielsweise die Temperatur des angeschlossenen Motors oder den Motorstrom bezüglich eines maximal zulässigen Grenzwertes überwachen. Zur Regelung der Drehzahl des angeschlossenen Motors mit Hilfe des Drehzahlreglers 6 wird der Steuer- und Regeleinrichtung 2 ein externer Soll-Drehzahlwert Nₛₒₗₗ zugeführt. Die eigentliche Steuerung bzw. Regelung der Betriebsparameter des angeschlossenen Motors erfolgt durch die Steuer- und Regeleinrichtung, in dem sie auf den Gleichstromsteller 14 und den Wechselrichter 15 zugreift und diese steuert.

Die automatische Identifikation des angeschlossenen Motors erfolgt auf folgende Art und Weise. Zur Motoridentifikation legt die Steuer- und Regeleinrichtung über den Gleichstromsteller 14 und den Wechselrichter 15 eine Meßspannung Uₘ an zwei der drei Phasen des Anschlusses 12 für den kollektorlosen Motor 3 an. Bei dem in Figur 1 gezeigten Ausführungsbeispiel wird diese Meßspannung Uₘ an die Phasen V und W angelegt. Zur Motoridentifikation sind die beiden Phasen des Anschlusses 13 für den Gleichstrom-Kollektormotor 4 mit zwei der drei Phasen des Anschlusses 12 für den kollektorlosen Motor 3 verbunden, d.h. die Schalter 17 und 18 befinden sich in der Stellung (1), wobei eine der beiden Phasen des Anschlusses 13 für den Gleichstrom-Kollektormotor 4 nicht mit der Meßspannung Uₘ beaufschlagt ist, d.h. bei der in Figur 1 gezeigten Schaltung sind die Phasen des Anschlusses 13 mit den Phasen U und W des Anschlusses 12 verbunden. Die Meßeinrichtung 16 ist mit beiden Anschlüssen 12 und 13 verbunden. Ist ein dreiphasiger kollektorloser Motor 3 an den Anschluß 12 angeschlossen, fließt über dessen Motorwicklung aufgrund der Meßspannung Uₘ ein Meßstrom Iₘ. Ist dagegen ein Gleichstrom-Kollektormotor 4 an den Anschluß 13 angeschlossen, fließt über diesen Motor kein Meßstrom Iₘ, da der Gleichstrom-Kollektormotor 4 in diesem Fall nicht mit der mit der Meßspannung Uₘ beaufschlagten Phase V des Anschlusses 12 verbunden ist. Die Meßeinrichtung 16 erfaßt den über den angeschlossenen Motor fließenden Motorstrom und führt das Ergebnis an die Steuer- und Regeleinrichtung 2 weiter. Die Steuer- und Regeleinrichtung 2 vergleicht den erfaßten Motorstrom mit einem vorgebenen Schwellwert und schließt aufgrund dieses Vergleiches auf den Typ des angeschlossenen Kleinmotors. Ist der erfaßte Motorstrom kleiner als der Schwellwert, erkennt die Steuer- und Regeleinrichtung, daß ein Gleichstrom-Kollektormotor 4 angeschlossen sein muß. Ist dagegen der erfaßte Motorstrom größer als der Schwellwert, identifiziert die Steuer- und Regeleinrichtung einen angeschlossenen kollektorlosen Motor 3. Das Ergebnis dieses Identifikationsvorganges wird in einem mit der Steuer- und Regeleinrichtung 2 verbundenen Speicher 5 abgelegt und bleibt in dem Speicher 5 gespeichert, bis eine neue Motoridentifikation durch die Steuer- und Regeleinrichtung 2 erfolgt.

Die Steuer- und Regeleinrichtung 2 führt eine Motoridentifikation jeweils bei Vorhandensein des entsprechenden Befehlssignales START durch. Empfängt die Steuer- und Regeleinrichtung 2 einen derartigen Start-Befehl, werden zunächst die Schalter 17 und 18 in die Stellung (1) gebracht und die Anschlüsse 12 und 13 wie in Figur 1 gezeigt, miteinander verschaltet und der Motortyp durch die Steuer- und Regeleinrichtung 2 durch Anlegen der Meßspannung Uₘ erkannt. Während der Durchführung der Motoridentifikation wird der angeschlossene Motor nicht durch die Steuerschaltung 1 betrieben. Nach Erkennen des angeschlossenen Kleinmotortyps durch die Steuer- und Regeleinrichtung 2 wird das Ergebnis bis zu der nächsten Motoridentifikation in dem Speicher 5 abgelegt und erst dann anschließend der Betrieb des angeschlossenen Motors abhängig von dem erkannten Kleinmotortyp durch die Steuer- und Regeleinrichtung 2 aufgenommen und die Betriebsparameter, wie z.B. die Drehzahl, des angeschlossenen Motors motortypabhängig gesteuert bzw. geregelt. Zum Betrieb eines Gleichstrom-Kollektormotors 4 wird, wie bereits zuvor erwähnt, die Anschlüsse des Gleichstrom-Kollektormotors 4 mit der von dem Gleichstromsteller 14 gelieferten Spannung direkt verbunden., d.h. die Schalter 17 und 18 werden in die Stellung (0) gebracht.

Anstelle der zuvor genannten Motoridentifikation kann auch vorgesehen sein, daß jeder Motortyp mit einer motoreigenen Kodierung, beispielsweise im Motoranschlußschlauch, versehen wird, die vor Inbetriebnahme des Motors abgefragt und dadurch der Motortyp durch die Steuer- und Regeleinrichtung vor Inbetriebnahme des Motors erkannt wird. Ebenso ist denkbar, daß die Steuer- und Regeleinrichtung 2 den angeschlossenen Motortyp durch Messung der dem jeweiligen Motor eigenen Impedanz identifiziert. Die in Figur 1 gezeigte und zuvor beschriebene Vorgehensweise zur Motoridentifikation weist jedoch den Vorteil auf, daß durch eine einfache schaltungstechnische Maßnahme, d.h. durch Verschaltung der Anschlüsse 12 und 13, ohne der Notwendigkeit einer Kodierung der entsprechenden Motoren ein angeschlossener Motor einfach und schnell erkannt werden kann. Eine technisch aufwendige Dekodierschaltung ist somit nicht erforderlich.

Aufgrund der erfindungsgemäßen Lösung ist es möglich, mit einer einzigen Steuerschaltung verschiedenartige Kleinmotoren für den Antrieb eines zahnärztlichen Instruments, z.B. kollektorlose Motoren oder Gleichstrom-Kollektormotoren, zu betreiben. Ein Zahnarztgerät mit der in Figur 1 gezeigten Steuerschaltung kann somit mit unterschiedlichen Motortypen bestückt werden und der Zahnarzt kann für den jeweiligen Anwendungsbereich den jeweils optimalen Motortyp wählen und mit einer einzigen Steuerschaltung betreiben.

Abschließend sei darauf hingewiesen, daß die erfindungsgemäße Steuerschaltung nicht nur für zahnärztliche Kleinmotoren, sondern allgemein für zahntechnische Antriebe auf dem gesamten zahntechnischen Bereich Anwendung finden kann.

## Patentansprüche

1. Steuerschaltung für dentale Antriebe (3, 4) zum Antrieb eines an einen dentalen Kleinmotor ankoppelbaren zahnärztlichen Instrumentes,
mit einer Steuer- und Regeleinrichtung (2) zum Steuern bzw. Regeln von bestimmten Betriebsparametern des an die Steuerschaltung (1) angeschlossenen dentalen Antriebs (3, 4),
**dadurch gekennzeichnet,**
**daß** die Steuerschaltung (1) derart ausgebildet ist, daß unterschiedliche Typen von dentalen Antrieben (3, 4) an die Steuerschaltung (1) anschließbar und durch die Steuerschaltung (1) ansteuerbar sind.

2. Steuerschaltung nach Anspruch 1,
**dadurch gekennzeichnet,**
**daß** die Steuerschaltung (1) automatisch den Typ des an die Steuerschaltung (1) angeschlossenen dentalen Antriebs (3, 4) erkennt und abhängig von dem erkannten Typ des angeschlossenen dentalen Antriebs (3, 4) über die Steuer- und Regeleinrichtung (2) die bestimmten Betriebsparameter des angeschlossenen dentalen Antriebs (3, 4) steuert bzw. regelt.

3. Steuerschaltung für dentale Antriebe (3, 4) zum Antrieb eines an einem dentalen Antrieb ankoppelbaren zahnärztlichen Instrumentes,
mit einer Steuer- und Regeleinrichtung (2) zum Steuern bzw. Regeln von bestimmten Betriebsparametern des an die Steuerschaltung (1) angeschlossenen dentalen Antriebs (3, 4),
**dadurch gekennzeichnet,**
**daß** die Steuerschaltung (1) automatisch den Typ des an die Steuerschaltung (1) angeschlossenen dentalen Antriebs (3, 4) erkennt und abhängig von dem erkannten Typ des angeschlossenen dentalen Antriebs (3, 4) über die Steuer- und Regeleinrichtung (2) die bestimmten Betriebsparameter des angeschlossenen dentalen Antriebs (3, 4) steuert bzw. regelt.

4. Steuerschaltung nach Anspruch 2 oder 3,
**dadurch gekennzeichnet,**
**daß** der erkannte Typ des angeschlossenen Kleinmotors (3, 4) in einem Speicher (5) gespeichert wird.

5. Steuerschaltung nach einem der Ansprüche 2 bis 4,
**dadurch gekennzeichnet,**
**daß** die Steuerschaltung (1) die Erkennung des Typs des angeschlossenen dentalen Antriebs (3, 4) jeweils bei Vorhandensein eines entsprechenden Befehlssignales (START) durchführt.

6. Steuerschaltung nach einem der vorhergehenden Ansprüche,
**dadurch gekennzeichnet,**
**daß** die Steuer- und Regeleinrichtung (2) zum Steuern bzw. Regeln der bestimmten Betriebsparameter einen Drehzahlregler (6) und/oder eine Strombegrenzungseinheit (7) und/oder einen Bremsregler (8) und/oder einen Links-Rechtslaufregler (9) und/oder eine Start-/Stopeinheit (10) und/oder eine Überwachungseinheit (11) zum Überwachen bestimmter Kennwerte der Steuerschaltung (1) oder des angeschlossenen dentalen Antriebs (3, 4) umfaßt.

7. Steuerschaltung nach einem der vorhergehenden Ansprüche,
**dadurch gekennzeichnet,**
**daß** der dentale Antrieb ein zahnärztlicher Kleinmotor ist.

8. Steuerschaltung nach einem der Ansprüche 2-7,
**dadurch gekennzeichnet,**
**daß** die Steuerschaltung (1) einen Anschluß (12) für einen dreiphasigen kollektorlosen Motor (3) und einen Anschluß (13) für einen zweiphasigen Gleichstrom-Kollektormotor (4) aufweist.

9. Steuerschaltung nach Anspruch 8,
**dadurch gekennzeichnet,**
**daß** zwei (U, W) der drei Phasen (U, V, W) des Anschlusses (12) für den dreiphasigen kollektorlosen Motor (3) mit den zwei Phasen des Anschlusses (13) für den zweiphasigen Gleichstrom-Kollektormotor (4) verbunden sind.

10. Steuerschaltung nach Anspruch 9,
**dadurch gekennzeichnet,**
**daß** die Steuerschaltung (1) zur Erkennung des Typs des angeschlossenen Kleinmotors (3, 4) eine Meßspannung (Uₘ) an zwei Phasen (V, W) des Anschlusses (12) für den dreiphasigen kollektorlosen Motor (3) anlegt, wobei eine (V) dieser zwei Phasen (V, W) nicht mit den Phasen des Anschlusses (13) für den zweiphasigen Gleichstrom-Kollektormotor (4) verbunden ist, und
**daß** die Steuerschaltung (1) den aufgrund der Meßspannung (Uₘ) hervorgerufenen und über den angeschlossenen Kleinmotor (3) fließenden Meßstrom (Iₘ) erfaßt und aufgrund des erfaßten Meßstroms (Im) den Typ den angeschlossenen Kleimmotors (3) identifiziert.

11. Steuerschaltung nach Anspruch 10,
**dadurch gekennzeichnet,**
**daß** die Steuerschaltung einen an eine Gleichspannung anzuschließenden Gleichstromsteller (14) und einen mit dem Gleichstromsteller (14) eingangsseitig verbundenen Wechselrichter (15) aufweist, wobei der Wechselrichter (5) ausgangsseitig mit dem dreiphasigen Anschluß (12) für den kollektorlosen Motor (3) verbunden ist.

12. Steuerschaltung nach Anspruch 11,
**dadurch gekennzeichnet,**
**daß** die Steuer- und Regeleinrichtung (2) den Gleichstromsteller (14) und den Wechselrichter (15) zum Anlegen der Meßspannung (Uₘ) und zum Steuern bzw. Regeln der bestimmten Betriebsparameter des angeschlossenen Kleinmotors (3) abhängig von dem erkannten Typ des angeschlossenen Kleinmotors (3) ansteuert.

13. Steuerschaltung nach einem der Ansprüche 8 bis 12,
**dadurch gekennzeichnet,**
**daß** die Steuerschaltung (1) eine Meßeinrichtung (16) zum Erfassen der Motorspannung und des Motorstroms des angeschlossenen Kleinmotors (3) aufweist, die eingangsseitig mit den Anschlüssen (12, 13) für die Kleinmotoren (3, 4) und ausgangsseitig mit der Steuer- und Regeleinrichtung (2) verbunden ist.

14. Steuerschaltung nach einem der Ansprüche 7 bis 13,
**dadurch gekennzeichnet,**
**daß** die Betriebsparameter die Motordrehzahl, den Links-/Rechtslaufbetrieb und den Start-/Stopbetrieb der Kleinmotoren (3, 4) umfassen.

## Claims

1. Control circuit for dental drives (3, 4) for driving a dental instrument which can be coupled to a dental small-size motor,
having a control and regulation device (2) for the control or regulation of particular operating parameters of the dental drive (3, 4) connected to the control circuit (1)
**characterized in that**,
the control circuit (1) is so constituted that different types of dental drives (3, 4) can be connected to the control circuit (1) and are controllable by means of the control circuit (1).

2. Control circuit according to claim 1,
**characterized in that**,
the control circuit (1) automatically recognizes the type of the dental drive (3, 4) connected to the control circuit (1) and in dependence upon the recognized type of the connected dental drive (3, 4) controls or regulates the particular operating parameters of the connected dental drive (3, 4) via the control and regulation device (2).

3. Control circuit for dental drives (3, 4) for driving a dental instrument which can be coupled to a dental small-size motor,
having a control and regulation device (2) for the control or regulation of particular operating parameters of the dental drive (3, 4) connected to the control circuit (1)
**characterized in that**,
the control circuit (1) automatically recognizes the type of the dental drive (3, 4) connected to the control circuit (1) and in dependence upon the recognized type of the connected dental drive (3, 4) controls or regulates the particular operating parameters of the connected dental drive (3, 4) via the control and regulation device (2).

4. Control circuit according to claim 2 or 3,
**characterized in that**,
the recognized type of the connected small-size motor (3, 4) is stored in a memory (5).

5. Control circuit according to any of claims 2 to 4,
**characterized in that**,
the control circuit (1) carries out recognition of the type of the connected dental drive (3, 4) in each case when a corresponding command signal (START) is present.

6. Control circuit according to any preceding claim,
**characterized in that**,
the control and regulation device (2), for the control or regulation of the particular operating parameters, includes a speed regulator (6) and/or a current limiting unit (7) and/or a braking regulator (8) and/or a clockwise/anti-clockwise running regulator (9) and/or a start/stop unit (10) and/or a monitoring unit (11) for monitoring particular characteristic values of the control circuit (1) or of the connected dental drive (3, 4).

7. Control circuit according to any preceding claim,
**characterized in that**,
the dental drive is a dental small-size motor.

8. Control circuit according to any of claims 2 to 7,
**characterized in that**,
the control circuit (1) has a connection (12) for a three-phase collectorless motor (3) and a connection (13) for a two-phase direct current collector motor.

9. Control circuit according to claim 8,
**characterized in that**,
two (U, W) of the three phases (U, V, W) of the connection (12) for the three-phase collectorless motor (3) are connected with the two phases of the connection (13) for the two-phase direct current collector motor (4).

10. Control circuit according to claim 9,
**characterized in that**,
the control circuit (1), for recognition of the type of the connected small-size motor (3, 4), applies a measurement voltage (Uₘ) to two phases (V,W) of the connection (12) for the three-phase collectorless motor (3), one (V) of these two phases (V, W) not being connected with the phases of the connection (13) for the two-phase direct current collector motor (4), and
**in that** the control circuit (1) detects the measurement current (Iₘ) brought about due to the measurement voltage (Uₘ) and flowing via the connected small-size motor (3) and identifies the type of the connected small-size motor (3) on the basis of the detected measurement current (Iₘ).

11. Control circuit according to claim 10,
**characterized in that**,
the control circuit has a d.c. chopper converter to be connected to a d.c. voltage, and an inverter (14) connected on the input side with the d.c. chopper converter (14), the inverter (5) being connected on the output side with the three-phase connection (12) for the collectorless motor (3).

12. Control circuit according to claim 11,
**characterized in that**,
the control and regulation device (2) controls the d.c. chopper converter (14) and the inverter (15) to apply the measurement voltage (Uₘ) and to control or regulate the particular operating parameters the connected small-size motor (3) in dependence upon the recognized type of the connected small-size motor (3).

13. Control circuit according to any of claims 8 to 12,
**characterized in that**,
the control circuit (1) has a measurement device (16) for detecting the motor voltage and motor current of the connected small-size motor (3), which device is connected on the input side with the connections (12, 13) for the small-size motors (3, 4) and on the output side with the control and regulation device (2).

14. Control circuit according to any of claims 7 to 13,
**characterized in that**,
the operating parameters include the motor speed, clockwise/anti-clockwise running operation and start/stop operation of the small-size motors (3, 4).

## Revendications

1. Circuit de commande pour des entraînements dentaires (3,4) destinés à l'entraînement d'un outil de dentiste pouvant être accouplé à un petit moteur dentaire,
avec un dispositif de commande et de régulation (2) pour la commande ou la régulation de paramètres de fonctionnement déterminés de l'entraînement dentaire raccordé (3,4),
**caractérisé en ce que**,
le circuit de commande (1) est conçu de telle sorte que différents types d'entraînements dentaires (3,4) peuvent être raccordés sur le circuit de commande (1) et actionnés par le circuit de commande (1).

2. Circuit de commande selon la revendication 1,
**caractérisé en ce que**,
le circuit de commande (1) reconnaît automatiquement le type d'entraînement dentaire (3,4) raccordé au circuit de commande (1) et en fonction du type reconnu de l'entraînement dentaire (3,4) raccordé, commande ou régule les paramètres de fonctionnement déterminés de l'entraînement dentaire (3,4) raccordé par l'intermédiaire du système de commande et de régulation (2).

3. Circuit de commande pour des entraînements dentaires (3,4) destiné à l'entraînement d'un outil de dentiste pouvant être accouplé à un entraînement dentaire,
avec un dispositif de commande et de régulation (2) destiné à commander ou réguler des paramètres de fonctionnement déterminés de l'entraînement dentaire raccordé au circuit de commande (1),
**caractérisé en ce que**,
le circuit de commande (1) reconnaît automatiquement le type d'entraînement dentaire (3,4) raccordé au circuit de commande (1) et en fonction du type reconnu d'entraînement dentaire (3,4) raccordé, il commande ou régule les paramètres de fonctionnement de l'entraînement (3,4) raccordé par l'intermédiaire du dispositif de commande et de régulation (2).

4. Circuit de commande selon la revendication 2 ou 3,
**caractérisé en ce que**,
le type reconnu de petit moteur (3,4) raccordé est mémorisé dans une mémoire (5).

5. Circuit de commande selon l'une des revendications 2 à 4,
**caractérisé en ce que**,
le circuit de commande (1) effectue la reconnaissance de l'entraînement dentaire (3,4) raccordé chaque fois en présence d'un signal d'ordre correspondant (Start).

6. Circuit de commande selon l'une des revendications précédentes,
**caractérisé en ce que**,
le dispositif de commande et de régulation (2) destiné à la commande ou à la régulation des paramètres de fonctionnements déterminés comprend un régulateur de nombre de tours (6) et/ou une unité de limitation de courant (7) et/ou un régulateur de freinage (8) et/ou un régulateur de marche à droite - gauche (9) et/ou une unité marche/arrêt (10) et/ou une unité de surveillance (11) pour la circuit de commande (1) ou de l'entraînement dentaire (3,4) raccordé.

7. Circuit de commande selon l'une des revendications précédentes,
**caractérisé en ce que**,
l'entraînement dentaire est un petit moteur de dentisterie.

8. Circuit de commande selon l'une des revendications 2-7,
**caractérisé en ce que**,
le circuit de commande (1) présente une connexion (12) pour un moteur triphasé sans collecteur (3) et une connexion (13) pour un moteur biphasé à courant continu avec collecteur (4).

9. Circuit de commande selon la revendication (8),
**caractérisé en ce que**,
deux (U,W) des trois phases (U,V,W) de la connexion (12) pour le moteur triphasé sans collecteur (3) sont raccordées aux deux phases de la connexion (13) pour le moteur biphasé à courant continu avec collecteur (4).

10. Circuit de commande selon la revendication 9,
**caractérisé en ce que**,
le circuit de commande (1) pour la reconnaissance du type du petit moteur raccordé (3,4) applique une tension de mesure (Uₘ) aux deux phases (V,W) de la connexion (12) pour le moteur triphasé sans collecteur (3), moyennant quoi une (V) de ces phases (V, W) n'est pas raccordée aux phases de la connexion (13) pour le moteur biphasé à courant continu avec collecteur (4), et
**en ce que** le circuit de commande (1) saisit le courant de mesure (Iₘ) provoqué par la tension de mesure (Uₘ) et passant par le petit moteur raccordé (3) et sur la base du courant de mesure (Im) saisi identifie le type de petit moteur raccordé (3).

11. Circuit de commande selon la revendication 10,
**caractérisé en ce que**,
le circuit de commande présente un convertisseur direct de courant continu (14) à raccorder à une tension continue et un onduleur (15) raccordé au convertisseur direct de courant continu (14) sur le côté entrée, l'onduleur (5) étant raccordé sur le côté sortie à la connexion triphasée (12) pour le moteur sans collecteur (3).

12. Circuit de commande selon la revendication 11,
**caractérisé en ce que**,
le dispositif de commande et de régulation (2) actionne le convertisseur direct de courant continu (14) et l'onduleur (15) pour l'application de la tension de mesure (Uₘ) et pour la commande ou la régulation des paramètres de fonctionnement déterminés du petit moteur raccordé (3) en fonction du type reconnu de petit moteur raccordé (3).

13. Circuit de commande selon l'une des revendications 8 à 12,
**caractérisé en ce que**,
le circuit de commande (1) présente un dispositif de mesure (16) destiné à saisir la tension de moteur et le courant de moteur du petit moteur raccordé (3), qui est raccordé sur le côté entrée aux connexions (12, 13) pour les petits moteurs (3,4) et sur le côté sortie au dispositif de commande et de régulation (2).

14. Circuit de commande selon l'une des revendications 7 à 13,
**caractérisé en ce que**,
les paramètres de fonctionnement comprennent le nombre de tours, la marche à droite/ à gauche et la fonction marche /arrêt des petits moteurs (3,4).
